# EUROPÄISCHE PATENTSCHRIFT

(11) **EP 4 476 138 B1**
(45) Veröffentlichungstag und Bekanntmachung des Hinweises auf die Patenterteilung: **06.08.2025**
(21) Anmeldenummer: 23705936.5
(22) Anmeldetag: 10.02.2023
(51) Int. Cl.: B64D 11/00

(54) **GEPÄCKFACH FÜR EIN FLUGZEUG**
LUGGAGE COMPARTMENT FOR AN AIRCRAFT
COMPARTIMENT À BAGAGES POUR UN AÉRONEF

(30) Priorität: 10.02.2022 AT 500852022
(43) Veröffentlichungstag der Anmeldung: 18.12.2024
(73) Patentinhaber: FACC AG, 4910 Ried im Innkreis (AT)
(72) Erfinder: KAMMERER, Bernhard, 4755 Zell an der Pram (AT); KLEMBARA, Lukas, 84106 Bratislava (SK)
(74) Vertreter: SONN Patentanwälte GmbH & Co KG
(86) Internationale Anmeldenummer: PCT/AT2023/060041
(87) Internationale Veröffentlichungsnummer: WO 2023/150815

(56) Entgegenhaltungen:
- US-A- 5 347 434
- US-A- 5 823 472

## Beschreibung

Die Erfindung betrifft ein Gepäckfach für ein Flugzeug, aufweisend:
ein Gepäckfachgehäuse, das einen Stauraum für ein Handgepäckstück einschließt,
ein Türteil,
eine Schwenkvorrichtung, mit welcher das Türteil zwischen einer eine Beladeöffnung des Gepäckfachgehäuses verschließenden Schließstellung und einer die Beladeöffnung des Gepäckfachgehäuses freigebenden Offenstellung verschwenkbar ist.

Weiters betrifft die Erfindung eine Gepäckfachgruppe mit zumindest zwei Gepäckfächern.

Schließlich betrifft die Erfindung ein Flugzeug mit einem Gepäckfach oder einer Gepäckfachgruppe.

Der allgemeine Stand der Technik wird durch US 5 823 472 A und US 5 347 434 A illustriert.

Wie in der WO2014/117198 beschrieben wird, sind Überkopf-Gepäckfächer für Flugzeuge in verschiedenen Ausführungen bekannt. Bei einer Ausführung ist ein feststehendes Gehäuse vorgesehen, welches mit einer verschwenkbaren Klappe verschlossen wird. Eine andere Ausführung sieht eine absenkbare Schütte vor, in welche das Handgepäck eingelegt werden kann.

Diese Überkopf-Gepäckfächer sind jedoch für manche Flugzeugtypen mit eingeschränkten Raumverhältnissen nicht geeignet. Für diese Anwendungen wurden komplizierte Speziallösungen entwickelt. Zum einen können geteilte Klappen eingesetzt werden, welche im geöffneten Zustand weniger weit in den Gangbereich vorstehen. Diese Lösung ist jedoch wenig intuitiv zu bedienen, aufwendig und schwergängig. Zum anderen ist eine Ausführung bekannt, bei welcher die Klappe beim Öffnen mit Hilfe eines Koppelgetriebes in das Innere des Gepäckfaches verschwenkt wird. Diese Ausführung hat jedoch einen hohen Platzbedarf, ist noch komplizierter und erfordert einen aufwendigen und anfälligen Schwenkmechanismus.

Der allgemeine Stand der Technik wird weiters durch US 2012012702 A1, WO 2019070481 A1, EP 2865597 A2, RU 2219080 C1 und DE 3904375 A1 gebildet.

Demgegenüber besteht die Aufgabe der vorliegenden Erfindung darin, zumindest einzelne Nachteile des Standes der Technik zu lindern bzw. zu beheben. Die Erfindung setzt sich insbesondere zum Ziel, ein einfach und intuitiv zu bedienendes Gepäckfach zu schaffen, welches für eine Anwendung in einem Flugzeug mit beengten Raumverhältnissen beim Öffnen weniger weit auslädt, ohne besondere Anforderungen an die Schwenkvorrichtung zu stellen.

Diese Aufgabe wird durch ein Gepäckfach nach Anspruch 1, eine Gepäckfachgruppe nach Anspruch 10 und ein Flugzeug nach Anspruch 12 gelöst. Bevorzugte Ausführungsformen sind in den abhängigen Ansprüchen angegeben.

Erfindungsgemäß weist das Türteil an einem oberen Eckbereich eine Aussparung auf, so dass ein seitlich an die Aussparung angrenzender Abschnitt des Türteils beim Überführen von der Schließ- in die Offenstellung in das Innere des Stauraums verschwenkbar ist.

In der Schließstellung verschließt das Türteil, auch als Klappe bezeichnet, die in den Stauraum führende Beladeöffnung, welche seitlich durch zwei Seitenwände des Gepäckfachgehäuses begrenzt wird. Das Türteil weist, jeweils auf die Schließstellung bezogen, eine Oberkante, eine Unterkante und zwei gegenüberliegende Seitenkanten auf. Erfindungsgemäß ist die Aussparung an dem Eckbereich vorgesehen, an welchem eine der Seitenkanten und die Oberkante des Türteils zusammentreffen. Somit weist die Seitenkante einen ersten Abschnitt entlang der Aussparung und einen zweiten Abschnitt anschließend an die Aussparung auf. Der erste Abschnitt der Seitenkante ist gegenüber dem zweiten Abschnitt nach innen versetzt, so dass der erste Abschnitt weiter innen als die Innenseite der benachbarten Seitenwand des Gepäckfachgehäuses angeordnet ist. Zum Öffnen des Gepäckfaches wird die Schwenkvorrichtung betätigt, wodurch das Türteil um eine, vorzugsweise im Wesentlichen senkrecht zur Seitenwand verlaufende, Schwenkachse gegenüber dem feststehenden Gepäckfachgehäuse verschwenkt wird. Bevorzugt ist ein einteiliges Türteil vorgesehen, welches zum Beladen des Stauraums hochgeschwenkt wird. Beim Verschwenken in die Offenstellung kann der obere Abschnitt des Türteils, welcher seitlich, d.h. in horizontaler Richtung, an die Aussparung anschließt, hinter die vorderseitige Beladeöffnung in das Innere des Stauraums geführt werden. Die Aussparung stellt somit die Verschwenkung des oberen Abschnitts des Türteils benachbart der Seitenwand des Gepäckfachgehäuses frei. Der untere Abschnitt des Türteils, welcher unterhalb der Aussparung, auf die Schließstellung bezogen, an den oberen Abschnitt des Türteils anschließt, ist hingegen auch in der Offenstellung außerhalb des Stauraums, d.h. vor der Stirnseite der Seitenwand, angeordnet. Dieser Versatz bewirkt zudem eine Reduktion der Geräusche, die von außerhalb des Flugzeugs durch das Gepäckfach in den Passagierraum eingeleitet werden. Durch die Verschwenkung des oberen Abschnitts des Türteils in das Innere des Gepäckfachgehäuses steht in der Offenstellung bevorzugt nur der untere Abschnitt des Türteils in Richtung senkrecht zur Beladeöffnung, d.h. im Gebrauchszustand in Richtung des Flugzeugganges, vor. Dadurch wird eine besonders platzsparende Anordnung in der Offenstellung erreicht, welche für Flugzeugtypen mit beschränken Platzverhältnissen besonders gut geeignet ist. Vorteilhaft ist weiters, dass die Freistellung der Verschwenkung über die Aussparung für den Benutzer intuitiv und auch im Dauereinsatz zuverlässig ist. Die Schwenkvorrichtung kann konstruktiv einfach gehalten werden.

Für die Zwecke dieser Offenbarung beziehen sich die Orts- und Richtungsangaben, wie "oben", "unten", "horizontal", "vertikal", auf den bestimmungsgemäßen Gebrauchszustand des Gepäckfaches in einer Flugzeugkabine bei horizontaler Lage des Flugzeugs. "Vorne" bezieht sich auf die dem Benutzer zugewandte Vorderseite des Gepäckfaches.

Um den oberen Abschnitt des Türteils beim Verschwenken in die Offenstellung an gegenüberliegenden Seiten neben den Seitenwänden des Gepäckfachgehäuses in den Stauraum einzuführen, ist es günstig, wenn das Türteil an beiden oberen Eckbereichen jeweils eine Aussparung aufweist. Bevorzugt sind die Aussparungen an den oberen Eckbereichen im Wesentlichen ident ausgebildet. Der obere Abschnitt des Türteils ist somit um die doppelte Breite der Aussparung schmäler als der untere Abschnitt des Türteils. Beim Öffnen wird der obere Abschnitt des Türteils, welcher sich zwischen den gegenüberliegenden Aussparungen erstreckt, in das Innere des Stau- bzw. Aufnahmeraums geführt.

Um eine kompakte Anordnung in der Offenstellung mit einer konstruktiv einfachen Schwenkvorrichtung zu ermöglichen, erstreckt sich die Aussparung bei einer bevorzugten Ausführungsform über weniger als die halbe Länge der Seitenkante des Türteils, insbesondere über weniger als ein Drittel der Länge der Seitenkante des Türteils.

Die Breite der Aussparung ist bevorzugt größer als die Wandstärke der Seitenwand. Weiters ist die Länge der Aussparung, d.h. die Erstreckung entlang der Seitenkante, bevorzugt größer, insbesondere um ein Mehrfaches größer, als die Breite der Aussparung. Beispielsweise kann die Aussparung eine Länge von 20 bis 200 Millimeter (mm), insbesondere von 70 bis 130 mm, beispielsweise im Wesentlichen 100 mm, und/oder eine Breite von 5 bis 50 mm, insbesondere von 10 bis 30 mm, beispielsweise im Wesentlichen 15 mm, aufweisen.

Um die Verschwenkbewegung freizustellen, ohne die Integrität des Türteils und das Erscheinungsbild wesentlich zu beeinträchtigen, ist die Aussparung bei einer bevorzugten Ausführungsform in Draufsicht, d.h. in Blickrichtung senkrecht zur Beladeöffnung, im Wesentlichen rechteckig.

Um eine Fläche für Informationsangaben und/oder ein Lichtelement zu schaffen und zudem eine im Wesentlichen einheitliche Oberfläche in der Schließstellung zu gewährleisten, ist bei einer bevorzugten Ausführungsform ein Verkleidungsteil mit dem Gepäckfachgehäuse verbunden, wobei das Verkleidungsteil in der Schließstellung des Gepäckfachgehäuses die Aussparung im Wesentlichen vollständig ausfüllt.

Bei einer bevorzugten Ausführungsform ist die Außenseite des Türteils in der Schließstellung im Wesentlichen in derselben Ebene wie die Außenseite des Verkleidungsteils angeordnet.

Um das Gepäckfachgehäuse in der Schließstellung seitlich im Wesentlichen bis zur Außenseite der Seitenwand abzudecken, ist es von Vorteil, wenn in der Schließstellung der zweite (untere) Abschnitt der Seitenkante des Türteils unterhalb der Aussparung im Wesentlichen bündig mit der Außenseite der Seitenwand des Gepäckfachgehäuses abschließt. Durch den Versatz der Seitenkante wird eine besonders geräuscharme Ausführung geschaffen.

Um die Überführung von der Schließ- in die Offenstellung zu ermöglichen, weist die Schwenkvorrichtung bei einer bevorzugten Ausführungsform einen Schwenkarm auf, welcher jeweils mit dem Türteil und der Seitenwand des Gepäckfachgehäuses verbunden ist. Bevorzugt ist der Schwenkarm, insbesondere ein erster Endbereich des Schwenkarms, über ein Gelenk, insbesondere über ein einzelnes Gelenk mit einer vorzugsweise im Wesentlichen senkrecht zur Seitenwand verlaufenden Schwenkachse, verschwenkbar mit der Seitenwand des Gepäckfachgehäuses verbunden. Weiters ist der Schwenkarm, insbesondere ein zweiter Endbereich des Schwenkarms, vorzugsweise fest mit der Innenseite des Türteils verbunden, so dass das Türteil durch Verschwenken des Schwenkarms entsprechend verschwenkt wird.

Zur Unterstützung der Verschwenkung des Türteils von der Schließ- in die Offenstellung weist die Schwenkvorrichtung bei einer bevorzugten Ausführungsform eine Kraftunterstützungseinrichtung, insbesondere mit einer Feder- und/oder Dämpfereinrichtung, auf. Beim Schließen des Gepäckfaches kann ein Federelement der Kraftunterstützungseinrichtung gespannt und beim Öffnen des Gepäckfaches entspannt werden. Als Federelement kann beispielsweise eine Schraubenfeder vorgesehen sein. Als Dämpfungselement der Kraftunterstützungseinrichtung kann beispielsweise ein Rotationsdämpfer vorgesehen sein, welcher vorzugsweise um die Schwenkachse der Schwenkvorrichtung angeordnet ist.

Zur Anwendung bei einem Flugzeug ist bevorzugt eine Gepäckfachgruppe mit zumindest zwei identen Gepäckfächern jeweils in einer der oben beschriebenen Ausführungsformen vorgesehen. Je nach Flugzeugtyp kann die Gepäckfachgruppe eine entsprechende Anzahl von Gepäckfächern, beispielsweise zumindest drei, insbesondere zumindest vier, vorzugsweise zumindest fünf, Gepäckfächer aufweisen, welche insbesondere auf gleicher Höhe nebeneinander angeordnet sein können.

Bei einer bevorzugten Ausführungsform füllt das Verkleidungsteil in der Schließstellung der Türteile zwei benachbarte Aussparungen der Türteile der Gepäckfächer im Wesentlichen vollständig aus. Somit können sich zwei Gepäckfächer an den einander zugewandten Seitenwänden ein gemeinsames Verkleidungsteil teilen, welches die Aussparungen an den benachbarten Eckbereichen der Türteile im Wesentlichen vollständig abdeckt. Sind drei Gepäckfächer vorgesehen, kann auch ein gemeinsames Verkleidungsteil auf der gegenüberliegenden Seite vorgesehen sein. Das Verkleidungsteil kann an der Seitenwand einer der beiden benachbarten Gepäckfächer angebracht sein.

Im Folgenden wird ein Ausführungsbeispiel der Erfindung näher erläutert, welches in den Zeichnungen zu sehen ist.
Fig. 1 zeigt eine erfindungsgemäße Gepäckfachgruppe mit zwei Gepäckfächern für ein Flugzeug.
Fig. 2 zeigt eine Detailansicht der Gepäckfachgruppe der Fig. 1.
Fig. 3 zeigt ein Türteil der Gepäckfachgruppe der Fig. 1 und 2.

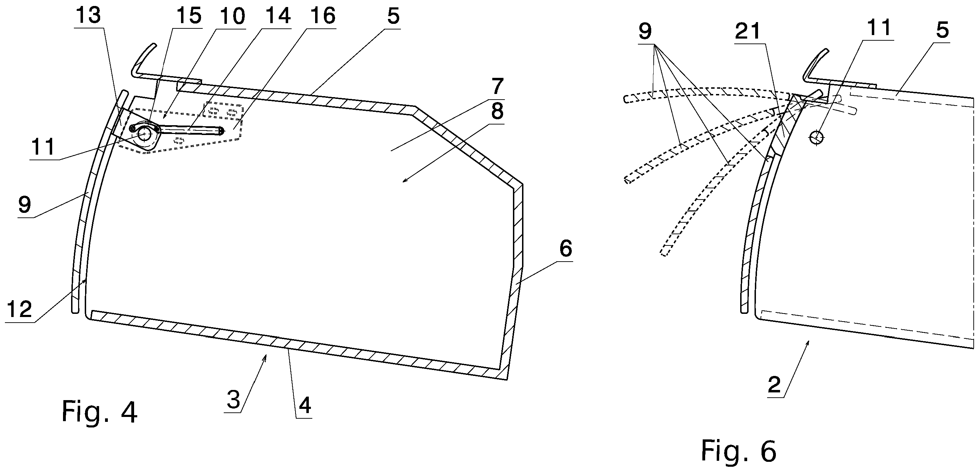

Fig. 4 zeigt eine Schnittansicht der Gepäckfachgruppe der Fig. 1 und Fig. 2 im Bereich einer Schwenkvorrichtung eines der Gepäckfächer.
Fig. 5 zeigt eine Detailansicht des Schnitts gemäß Fig. 4 in der Schließstellung des Gepäckfaches, wobei zudem zwei Zwischenstellungen und die Offenstellung des Türteils mit strichlierten Linien angedeutet sind.
Fig. 6 zeigt eine Schnittansicht der Gepäckfachgruppe im Bereich eines Verkleidungsteils.

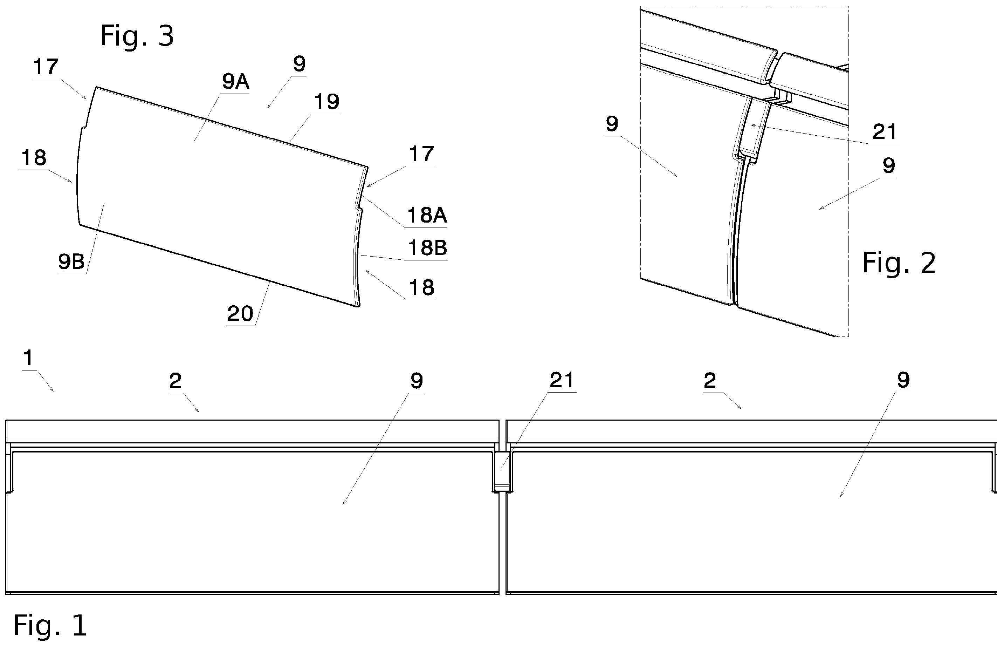

Fig. 1 zeigt eine Gepäckfachgruppe 1, welche in der gezeigten Ausführung zwei nebeneinander angeordnete Gepäckfächer 2 aufweist. Die Gepäckfachgruppe 1 wird in einer (nicht gezeigten) Flugzeugkabine installiert, um das Verstauen von Handgepäck während des Fluges zu ermöglichen. Das Gepäckfach 2 weist ein stillstehendes (d.h. beim Öffnen des Gepäckfaches 2 unbeweglich angeordnetes) Gepäckfachgehäuse 3 mit einem Bodenteil 4, einem Oberteil 5, einer Rückwand 6 und zwei gegenüberliegenden Seitenwänden 7 auf, welche im Inneren einen Stauraum 8 für Handgepäckstücke einschließen. Das Gepäckfach 2 weist zudem ein Türteil 9, auch als Klappe bezeichnet, auf, welche mit dem Gepäckfachgehäuse 3 über eine Schwenkvorrichtung 10 verbunden ist. Mit Hilfe der Schwenkvorrichtung 10 kann das Türteil 9 um eine ortsfeste Schwenkachse 11 von einer Schließstellung in eine Offenstellung (und umgekehrt) verschwenkt werden. In der Schließstellung ist eine in den Stauraum 8 führende Beladeöffnung 12 an der dem Benutzer zugewandten Vorderseite des Gepäckfachgehäuses 3 verschlossen. In der Offenstellung kann der Stauraum 8 über die Beladeöffnung 12 mit den Gepäckstücken beladen werden.

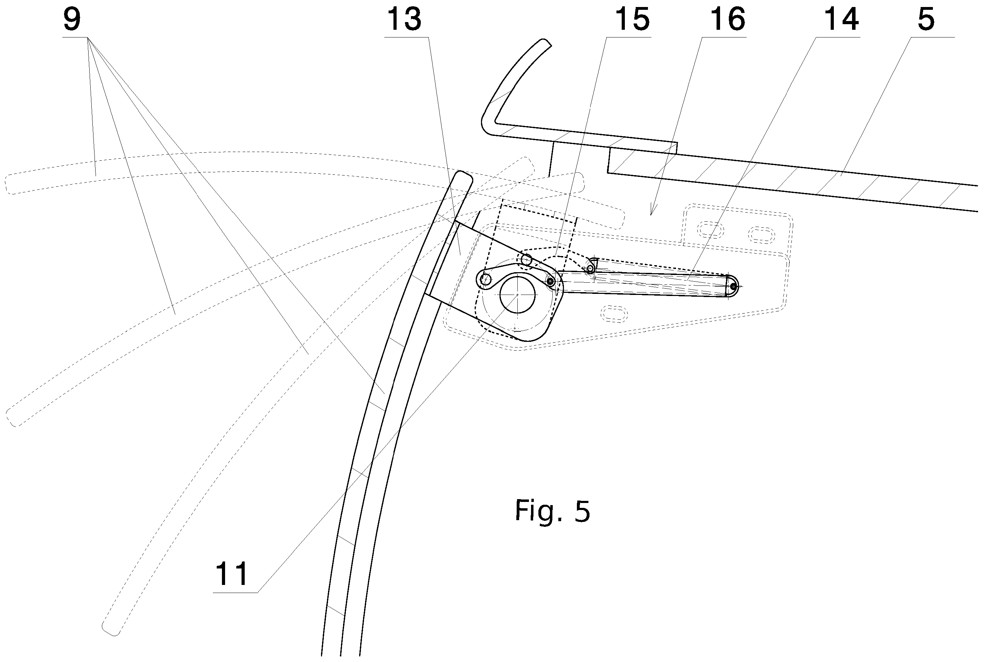

In der gezeigten Ausführung weist die Schwenkvorrichtung 10 einen Schwenkarm 13 auf, der mit der Innenseite des Türteils 9 verbunden ist. Der Schwenkarm 13 ist um die Schwenkachse 11 verschwenkbar, um das Türteil 9 von der Schließ- in die Offenstellung (und umgekehrt) mitzunehmen. In der gezeigten Ausführung weist die Schwenkvorrichtung 10 zudem eine Kraftunterstützungseinrichtung mit einer Feder- und Dämpfereinrichtung 14 auf. Die Feder- und Dämpfereinrichtung 14 weist ein Federelement, hier eine Schraubenfeder, auf, welche beim Verschwenken des Türteils 9 von der Schließ- in die Offenstellung jene Federenergie freigibt, die zuvor beim Verschwenken von der Offen- in die Schließstellung gespeichert wurde. Zudem weist die Kraftunterstützungseinrichtung ein Dämpfungselement auf, welches in der gezeigten Ausführung durch einen an der Schwenkachse 11 angeordneten Rotationsdämpfer gebildet ist. Die Schwenkvorrichtung 10 ist in der Zeichnung nur schematisch dargestellt und kann, wie im Stand der Technik bekannt, in verschiedensten Ausführungen ausgestaltet werden. Beispielsweise kann die Feder- und Dämpfereinrichtung 14 über einen Zwischenhebel 15 mit dem Schwenkarm 13 verbunden sein. Dabei kann das eine Ende des Zwischenhebels 15 gelenkig am Schwenkarm 13 und das andere Ende des Zwischenhebels 15 gelenkig mit dem Feder-Dämpfer 14 verbunden sein. Der Zwischenhebel 15 ist so angeordnet, dass der Hebelarm zur Schwenkachse in der Schließstellung kleiner als in der Offenstellung ist. Die Federkraft ist hingegen in der Schließstellung größer als in der Offenstellung. Dadurch wird ein günstiger Kraftverlauf zwischen der Schließ- und der Offenstellung erreicht. Weiters kann die Schwenkvorrichtung 10 eine, nur schematisch ersichtliche, Einhausung 16 aufweisen, welche beispielsweise an der Innenseite der Seitenwand 7 des Gepäckfachgehäuses 3 montiert sein kann. In Fig. 5 ist das Türteil in der Schließ-, in der Offenstellung und zwei Zwischenstellungen zwischen der Schließ- und der Offenstellung dargestellt. Der besseren Übersicht halber ist die Schwenkvorrichtung 10 nur in den Stellungen entsprechend der Schließ- und der Offenstellung des Türteils 9 dargestellt.

Erfindungsgemäß sind die oberen Eckbereiche des Türteils 9 jeweils mit einem Ausschnitt bzw. einer Aussparung 17 ausgebildet, so dass ein oberer Türabschnitt 9A und ein unterer Türabschnitt 9B gebildet sind. Der obere Türabschnitt 9 erstreckt sich horizontal zwischen den Aussparungen 17. Der untere Türabschnitt 9B erstreckt sich unterhalb der Aussparungen 17. Die Aussparungen 17 sind derart dimensioniert und angeordnet, dass der obere Türabschnitt 9 beim Überführen in die Offenstellung hinter die Beladeöffnung 12 in das Innere des Stauraums 8 eintaucht. Dabei werden obere Abschnitte 18A von Seitenkanten 18 des Türteils 9 neben den (dem Stauraum 8 zugewandten) Innenseiten der Seitenwände 7 vorbeigeführt. Untere Abschnitte 18B der Seitenkanten 18 springen gegenüber den oberen Abschnitten 18A nach außen so vor, dass die unteren Abschnitte 18B der Seitenkanten 18 in der Schließstellung im Wesentlichen bündig mit den Außenseiten der Seitenwände 7 des Gepäckfachgehäuses 3 abschließen. Beim Verschwenken in die Offenstellung wird eine Oberkante 19 des Türteils 9 hinter die Schwenkachse 11 in das Innere des Stauraums 8 verlagert. Dadurch ragt eine Unterkante 20 des Türteils 9 in der Offenstellung weniger weit in Richtung senkrecht zur Beladeöffnung 12 nach vorne vor.

In der gezeigten Ausführung ist mit dem Gepäckfachgehäuse 3 ein feststehendes, d.h. insbesondere die Verschwenkung des Türteils 9 nicht mitmachendes, Verkleidungsteil 21 verbunden, welches in der Schließstellung des Gepäckfachgehäuses 3 die Aussparung 17 ausfüllt. Sind zwei Gepäckfächer 2 nebeneinander angeordnet, kann ein einzelnes Verkleidungsteil 21 zwei benachbarte Aussparungen 17 zweier aufeinandertreffender Eckbereiche der Gepäckfächer 2 verdecken. Die (vom Stauraum 8 abgewandte) Außenseite des Türteils 9 ist in der Schließstellung im Wesentlichen in derselben Ebene wie die Außenseite des Verkleidungsteils 21 angeordnet.

## Patentansprüche

1. Gepäckfach (2) für ein Flugzeug, aufweisend:
ein Gepäckfachgehäuse (3), das einen Stauraum (8) für ein Handgepäckstück einschließt,
ein Türteil (9),
eine Schwenkvorrichtung (10), mit welcher das Türteil (9) zwischen einer eine Beladeöffnung (12) des Gepäckfachgehäuses (3) verschließenden Schließstellung und einer die Beladeöffnung (12) des Gepäckfachgehäuses (3) freigebenden Offenstellung verschwenkbar ist,
**dadurch gekennzeichnet, dass**
das Türteil (9) an einem oberen Eckbereich eine Aussparung (17) aufweist, so dass ein seitlich an die Aussparung (17) angrenzender Abschnitt (9A) des Türteils (9) beim Überführen von der Schließ- in die Offenstellung in das Innere des Stauraums (8) geführt wird.

2. Gepäckfach (2) nach Anspruch 1, **dadurch gekennzeichnet, dass** das Türteil (9) an beiden oberen Eckbereichen jeweils eine Aussparung (17) aufweist.

3. Gepäckfach (2) nach Anspruch 1 oder 2, **dadurch gekennzeichnet, dass** sich die Aussparung (17) über weniger als die halbe Länge einer Seitenkante (18) des Türteils (9), insbesondere über weniger als ein Drittel der Länge der Seitenkante (18) des Türteils (9), erstreckt.

4. Gepäckfach (2) nach einem der Ansprüche 1 bis 3, **dadurch gekennzeichnet, dass** die Aussparung (17) in Draufsicht im Wesentlichen rechteckig ist.

5. Gepäckfach (2) nach einem der Ansprüche 1 bis 4, **dadurch gekennzeichnet, dass** mit dem Gepäckfachgehäuse (3) ein Verkleidungsteil (21) verbunden ist, welches in der Schließstellung des Gepäckfachgehäuses (3) die Aussparung (17) im Wesentlichen vollständig ausfüllt.

6. Gepäckfach (2) nach Anspruch 5, **dadurch gekennzeichnet, dass** die Außenseite des Türteils (9) in der Schließstellung im Wesentlichen in derselben Ebene wie die Außenseite des Verkleidungsteils (21) angeordnet ist.

7. Gepäckfach (2) nach einem der Ansprüche 1 bis 6, **dadurch gekennzeichnet, dass** in der Schließstellung ein Abschnitt der Seitenkante (18) des Türteils (9) unterhalb der Aussparung (17) im Wesentlichen bündig mit der Außenseite einer Seitenwand (7) des Gepäckfachgehäuses (3) abschließt.

8. Gepäckfach (2) nach einem der Ansprüche 1 bis 7, **dadurch gekennzeichnet, dass** die Schwenkvorrichtung (10) einen Schwenkarm (13) aufweist, welcher jeweils mit dem Türteil (9) und einer Seitenwand (7) des Gepäckfachgehäuses (3) verbunden ist.

9. Gepäckfach (2) nach einem der Ansprüche 1 bis 8, **dadurch gekennzeichnet, dass** die Schwenkvorrichtung (10) eine Kraftunterstützungseinrichtung, insbesondere mit einer Feder- und/oder Dämpfereinrichtung (14), zur Unterstützung der Verschwenkung des Türteils (9) von der Schließ- in die Offenstellung aufweist.

10. Gepäckfachgruppe (1) mit zumindest zwei Gepäckfächern (2), welche jeweils nach einem der Ansprüche 1 bis 9 ausgebildet sind.

11. Gepäckfachgruppe (1) nach Anspruch 10, soweit auf Anspruch 5 bezogen, **dadurch gekennzeichnet, dass** das Verkleidungsteil (21) in der Schließstellung der Türteile (9) zwei benachbarte Aussparungen (17) der Türteile (9) der Gepäckfächer (2) im Wesentlichen vollständig ausfüllt.

12. Flugzeug mit einem Gepäckfach (2), insbesondere einem Überkopf-Gepäckfach, nach einem der Ansprüche 1 bis 9 oder mit einer Gepäckfachgruppe (1) nach Anspruch 10 oder 11.

## Claims

1. Luggage compartment (2) for an aircraft, comprising:
a luggage compartment housing (3) enclosing a storage space (8) for a piece of hand luggage,
a door part (9),
a pivoting device (10) by means of which the door part (9) can be pivoted between a closed position closing a loading opening (12) of the luggage compartment housing (3) and an open position releasing the loading opening (12) of the luggage compartment housing (3),
**characterized in that**
the door part (9) comprises a recess (17) at an upper corner region, so that an adjoining section (9A) of the door part (9) at the side of the recess (17) is guided into the interior of the storage space (8) during transfer from the closed position to the open position.

2. Luggage compartment (2) according to claim 1, **characterized in that** the door part (9) comprises a recess (17) at each of the two upper corner regions.

3. Luggage compartment (2) according to claim 1 or 2, **characterized in that** the recess (17) extends over less than half the length of a side edge (18) of the door part (9), in particular over less than one third of the length of the side edge (18) of the door part (9).

4. Luggage compartment (2) according to one of claims 1 to 3, **characterized in that** the recess (17) is essentially rectangular in plan view.

5. Luggage compartment (2) according to one of claims 1 to 4, **characterized in that** a part of lining (21) is connected to the luggage compartment housing (3), which part of lining substantially completely fills the recess (17) in the closed position of the luggage compartment housing (3).

6. Luggage compartment (2) according to claim 5, **characterized in that** the outer side of the door part (9) in the closed position is arranged essentially in the same plane as the outer side of the part of lining (21).

7. Luggage compartment (2) according to one of claims 1 to 6, **characterized in that**, in the closed position, a section of the side edge (18) of the door part (9) below the recess (17) is essentially flush with the outside of a side panel (7) of the luggage compartment housing (3).

8. Luggage compartment (2) according to one of claims 1 to 7, **characterized in that** the pivoting device (10) comprises a pivot arm (13) which is connected in each case to the door part (9) and a side panel (7) of the luggage compartment housing (3).

9. Luggage compartment (2) according to one of claims 1 to 8, **characterized in that** the pivoting device (10) comprises a force support device, in particular with a spring and/or damper device (14), to support the pivoting of the door part (9) from the closed position into the open position.

10. Luggage compartment unit (1) with at least two luggage compartments (2), which are each designed according to one of claims 1 to 9.

11. Luggage compartment unit (1) according to claim 10, as far as related to claim 5, **characterized in that**, in the closed position of the door parts (9), the lining part (21) substantially completely fills two adjacent recesses (17) of the door parts (9) of the luggage compartments (2).

12. Aircraft with a luggage compartment (2), in particular an overhead luggage compartment, according to one of claims 1 to 9 or with a luggage compartment unit (1) according to claim 10 or 11.

## Revendications

1. Compartiment à bagages (2) pour un avion, comprenant :
un boîtier de compartiment à bagages (3) définissant un espace de stockage (8) pour une pièce de bagage à main,
une partie de porte (9),
un dispositif pivotant (10) permettant de pivoter la partie de porte (9) entre une position fermée verrouillant une ouverture de chargement (12) du boîtier de compartiment à bagages (3) et une position ouverte libérant l'ouverture de chargement (12) du boîtier de compartiment à bagages (3),
**caractérisé en ce que**
la partie de porte (9) présente une découpe (17) dans un coin supérieur, de sorte qu'une section (9A) adjacente à la découpe (17) de la partie de porte (9) est guidée à l'intérieur de l'espace de stockage (8) lors du passage de la position fermée à la position ouverte.

2. Compartiment à bagages (2) selon la revendication 1, **caractérisé en ce que** la partie de porte (9) présente une découpe (17) dans chacun des coins supérieurs.

3. Compartiment à bagages (2) selon la revendication 1 ou 2, **caractérisé en ce que** la découpe (17) s'étend sur moins de la moitié de la longueur d'un bord latéral (18) de la partie de porte (9), en particulier sur moins d'un tiers de la longueur du bord latéral (18) de la partie de porte (9).

4. Compartiment à bagages (2) selon l'une des revendications 1 à 3, **caractérisé en ce que** la découpe (17) est essentiellement rectangulaire en vue de dessus.

5. Compartiment à bagages (2) selon l'une des revendications 1 à 4, **caractérisé en ce qu'**un élément de garniture (21) est fixé au boîtier de compartiment à bagages (3), lequel élément de garniture (21) remplit essentiellement complètement la découpe (17) en position fermée du boîtier de compartiment à bagages (3).

6. Compartiment à bagages (2) selon la revendication 5, **caractérisé en ce que** la face extérieure de la partie de porte (9) est disposée essentiellement dans le même plan que la face extérieure de l'élément de garniture (21) en position fermée.

7. Compartiment à bagages (2) selon l'une des revendications 1 à 6, **caractérisé en ce qu'**une section du bord latéral (18) de la partie de porte (9) en dessous de la découpe (17) est essentiellement alignée avec la face extérieure d'une paroi latérale (7) du boîtier de compartiment à bagages (3) en position fermée.

8. Compartiment à bagages (2) selon l'une des revendications 1 à 7, **caractérisé en ce que** le dispositif pivotant (10) comprend un bras pivotant (13) connecté à la fois à la partie de porte (9) et à une paroi latérale (7) du boîtier de compartiment à bagages (3).

9. Compartiment à bagages (2) selon l'une des revendications 1 à 8, **caractérisé en ce que** le dispositif pivotant (10) comprend un dispositif de support de force, en particulier un dispositif de ressort et/ou d'amortissement (14), pour assister la rotation de la partie de porte (9) de la position fermée à la position ouverte.

10. Groupe de compartiments à bagages (1) comprenant au moins deux compartiments à bagages (2) conçus chacun selon l'une des revendications 1 à 9.

11. Groupe de compartiments à bagages (1) selon la revendication 10, dans la mesure où elle se réfère à la revendication 5, **caractérisé en ce que** l'élément de garniture (21) remplit essentiellement complètement deux découpes (17) adjacentes des parties de porte (9) des compartiments à bagages (2) en position fermée.

12. Avion comprenant un compartiment à bagages (2), en particulier un compartiment à bagages en soute, selon l'une des revendications 1 à 9, ou comprenant un groupe de compartiments à bagages (1) selon la revendication 10 ou 11.
